# EUROPEAN PATENT APPLICATION

(11) **EP 4 339 694 A1**
(43) Date of publication of application: **20.03.2024**
(21) Application number: 22306345.4
(22) Date of filing: 13.09.2022
(51) Int. Cl.: G02C 7/02

(54) **A METHOD FOR OPTIMIZING AN OPHTHALMIC LENS**

(71) Applicant: Essilor International, 94220 Charenton-Le-Pont (FR)
(72) Inventor: LE CAIN, Aurélie, 94000 CRETEIL (FR); BENOIT-PASANAU, Céline, 94230 CACHAN (FR); CALIXTE, Laurent, 75012 PARIS (FR); BARANTON, Konogan, 77450 MONTRY (FR); WEXLER, Mark, 67100 STRASBOURG (FR)
(74) Representative: Ipsilon

(57) **Abstract**

This method for optimizing at least one ophthalmic lens comprises: defining (10) wearer parameters comprising at least the wearer's prescription and lens wearing conditions including relative positions of a wearer's eye and of the lens; defining (12) a tridimensional environment to be viewed by the wearer's eye through the lens; defining (14) a set of fixation points or gaze directions; determining (16) a deviation map of the lens, based on the defined wearer parameters and lens wearing conditions, the tridimensional environment and the set of fixation points or gaze directions; modelling (18) at least one cue of tridimensional distortion of the environment, based on the deviation map; defining (20) at least one target value related to the at least one cue of tridimensional distortion according to at least one predetermined criterion related to tridimensional distortion; calculating (22) a design of the lens that is as close as possible to the target value.

## Description

### FIELD OF THE INVENTION

The present invention relates to a method for optimizing an ophthalmic lens.

### BACKGROUND OF THE INVENTION

In the state of the art, designing an ophthalmic lens that provides an optimal tridimensional perception is a difficult task. Namely, depth vision is based on many cues, such as stereoscopy, apparent size, perspective, motion parallax, shading, etc.

Some of these cues are impaired by lens distortion and different cues may be impaired in different manners, thereby causing conflict and leading to non-optimal tridimensional perception.

For instance, in a single vision lens, a negative power reduces the apparent size and oblique astigmatism tilts vertical and horizontal lines. In a progressive lens, the variation of power throughout the lens has an even more complex effect, as the near vision area with higher power causes magnification and is surrounded by two astigmatic areas, causing misorientation and image rotation, magnification is not isotropic.

The global effect of such distortion is uneasy to describe. It is usually expressed by bidimensional deviation, despite the fact that the wearer perceives the world in three dimensions.

More generally, distortion is a source of misperception. Objects may appear as tilted, deformed. In static situations, interaction with objects may be awkward and in dynamic situations such as locomotion, balance or steering may be impaired.

While some wearers get adapted to such vision, adaptation may occur according to variable time scales ranging from instantaneous and imperceptible to several days, some others will not adapt and remain uncomfortable, at different levels of dizziness.

Thus, there is a need to be able to optimize an ophthalmic lens by reducing vision impairment due to lens wearer's perceived distortion of the environment.

### SUMMARY OF THE INVENTION

An object of the present disclosure is to overcome the above-mentioned drawbacks of the prior art.

To that end, the present disclosure provides a method for optimizing at least one ophthalmic lens, wherein said method comprises:
defining wearer parameters comprising at least the wearer's prescription and lens wearing conditions including relative positions of a wearer's eye and of the at least one ophthalmic lens;
defining a tridimensional environment to be viewed by the wearer's eye through the at least one ophthalmic lens;
defining a set of fixation points or gaze directions;
determining a deviation map of the at least one ophthalmic lens, based on the defined wearer parameters and lens wearing conditions, the tridimensional environment and the set of fixation points or gaze directions;
modelling at least one cue of tridimensional distortion of the environment, based on the deviation map;
defining at least one target value related to the at least one cue of tridimensional distortion according to at least one predetermined criterion related to tridimensional distortion;
calculating a design of the at least one ophthalmic lens that is as close as possible to the at least one target value.

Thus, the method according to the disclosure makes it possible to integrate algorithms of space perception in a model of the wearer equipped with at least one ophthalmic lens, in a synthetic or measured environment and performing a visual task. Then, distortions are transformed into a tridimensional space deformation and a possible balance perturbation. This new metric makes it possible to improve the design of the at least one ophthalmic lens, reducing discomfort and misperception for the wearer.

In a particular embodiment, the method comprises taking into account at least two cues of tridimensional distortion of an environment viewed by a wearer through the at least one ophthalmic lens and reducing the inconsistency between at least two of these cues of tridimensional distortion.

In a particular embodiment, the method comprises:
defining at least two different cues of tridimensional distortion;
defining the set of fixation points or gaze directions to evaluate the defined at least two different cues of tridimensional distortion;
defining an inconsistency criterion to evaluate a difference between tridimensional image points calculated from the at least two different cues of tridimensional distortion;
evaluating, for the set of fixation points or gaze directions, tridimensional distortions for each of the defined at least two different cues of tridimensional distortion;
evaluating, for the set of fixation points or gaze directions, the defined inconsistency criterion corresponding to the evaluated tridimensional distortions;
defining the at least one target value for said inconsistency criterion.

In a particular embodiment, the method comprises taking into account at least two cues of tridimensional distortion of an environment viewed by a wearer through the at least one ophthalmic lens and reducing at least two of these cues of tridimensional distortion respectively related to objects located at different locations viewed by the wearer.

In that embodiment, according to particular features, the method may comprise:
defining at least two different cues of tridimensional distortion of the environment;
defining the set of fixation points or gaze directions to evaluate the defined at least two different cues of tridimensional distortion;
defining, for each of the at least two different cues of tridimensional distortion, weights as a function of the location of object points with respect to the wearer;
defining at least one tridimensional distortion criterion to evaluate either punctually tridimensional distorted image points corresponding to the set of fixation points, or globally the tridimensional distorted environment;
calculating, for the set of fixation points or gaze directions, tridimensional distorted image points or the tridimensional distorted environment for each of the defined at least two different cues of tridimensional distortion;
evaluating, for the set of fixation points or gaze directions, the defined at least one tridimensional distortion criterion for the calculated tridimensional distorted image points or the calculated tridimensional distorted environment;
defining the at least one target value for the at least one tridimensional distortion criterion;
calculating the design of the at least one ophthalmic lens that is as close as possible to the at least one target value, taking into account the defined weights.

In a particular embodiment, the method comprises selecting at least one of the cues of tridimensional distortion that is relevant with respect to the wearer's lifestyle and reducing the selected at least one cue.

In that embodiment, according to particular features, the method may comprise:
defining the wearer's lifestyle;
defining at least one cue of tridimensional distortion corresponding to the defined wearer's lifestyle;
defining the set of fixation points or gaze directions to evaluate the defined at least one cue of tridimensional distortion;
defining at least one tridimensional distortion criterion to evaluate either punctually tridimensional distorted image points corresponding to the set of fixation points, or globally the tridimensional distorted environment;
calculating, for the set of fixation points or gaze directions, tridimensional distorted image points or the tridimensional distorted environment for the defined at least one cue of tridimensional distortion;
evaluating, for the set of fixation points or gaze directions, the defined at least one tridimensional distortion criterion for the calculated tridimensional distorted image points or the calculated tridimensional distorted environment;
defining the at least one target value for the at least one tridimensional distortion criterion.

In a particular embodiment, the method comprises determining at least one of the cues of tridimensional distortion to which said wearer is sensitive and reducing the determined at least one cue.

In that embodiment, according to particular features, the method may comprise:
defining at least one cue of tridimensional distortion to which the wearer is sensitive;
defining the set of fixation points or gaze directions to evaluate the defined at least one cue of tridimensional distortion;
defining at least one tridimensional distortion criterion to evaluate either punctually tridimensional distorted image points corresponding to the set of fixation points, or globally the tridimensional distorted environment;
calculating, for the set of fixation points or gaze directions, tridimensional distorted image points or the tridimensional distorted environment for the defined at least one cue of tridimensional distortion;
evaluating, for the set of fixation points or gaze directions, the defined at least one tridimensional distortion criterion for the calculated tridimensional distorted image points or the calculated tridimensional distorted environment;
defining the at least one target value for the at least one tridimensional distortion criterion.

In a particular embodiment, the method comprises:
taking into account at least two cues of tridimensional distortion of an environment viewed by a wearer through the at least one ophthalmic lens;
assigning first weights to the at least two cues of tridimensional distortion depending on object proximity;
assigning second weights to wearer's activities depending on the wearer's lifestyle;
assigning third weights to the at least two cues of tridimensional distortion depending on the wearer's sensitivity to the at least two cues of tridimensional distortion;
reducing the inconsistency between at least two of the cues of tridimensional distortion;
reducing at least two of the cues of tridimensional distortion weighted with the first weights and respectively related to objects located at different locations with respect to the wearer;
selecting at least one of the cues of tridimensional distortion that is relevant with respect to the wearer's lifestyle comprising the second weights and reducing the at least one selected cue;
determining at least one of the cues of tridimensional distortion to which said wearer is sensitive and reducing the at least one determined cue weighted with the third weights, taking into account a level of confidence of the at least one determined cue.

In a particular embodiment, the method further comprises taking into account at least one additional criterion related to quality of vision.

In that embodiment, according to a particular feature, the method may further comprise assigning a fourth weight to the at least one additional criterion.

According to a particular feature, the additional criterion may be taken in a group comprising power and astigmatism error, acuity loss, contrast sensitivity and the wearer's age.

In a particular embodiment, the at least one cue of tridimensional distortion is taken in a group comprising stereopsis, half-square, magnification, motion parallax, vergence, motion disparities, shape from shading, blur and overlapping.

In a particular embodiment, the at least one ophthalmic lens is a progressive lens.

### BRIEF DESCRIPTION OF THE DRAWINGS

For a more complete understanding of the description provided herein and the advantages thereof, reference is now made to the brief descriptions below, taken in connection with the accompanying drawings and detailed description, wherein like reference numerals represent like parts.
FIG. 1 is a flow diagram showing steps of a method according to the present disclosure, in a particular embodiment.
FIG. 2 is a graph illustrating calculation of the stereopsis distortion cue.
FIGS. 3, 4, 5 and 6 are graphs showing a non-limiting example of tridimensional distorted images of a virtual object environment viewed by a wearer from different points of view, the distorted images being calculated in a method according to the present disclosure, in a particular embodiment.
FIGS. 7, 8, 9 and 10 are graphs showing a non-limiting example of tridimensional distorted images of a virtual object environment viewed by a wearer from the same points of view as in Figures 3 to 6 and show additionally the distorted images obtained with ophthalmic lenses optimized by using a method according to the present disclosure.

### DETAILED DESCRIPTION OF EMBODIMENTS

In the description which follows, the drawing figures are not necessarily to scale and certain features may be shown in generalized or schematic form in the interest of clarity and conciseness or for informational purposes. In addition, although making and using various embodiments are discussed in detail below, it should be appreciated that as described herein are provided many inventive concepts that may embodied in a wide variety of contexts. Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process.

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises", "has", "contains", or "includes" one or more steps or elements possesses those one or more steps or elements, but is not limited to possessing only those one or more steps or elements.

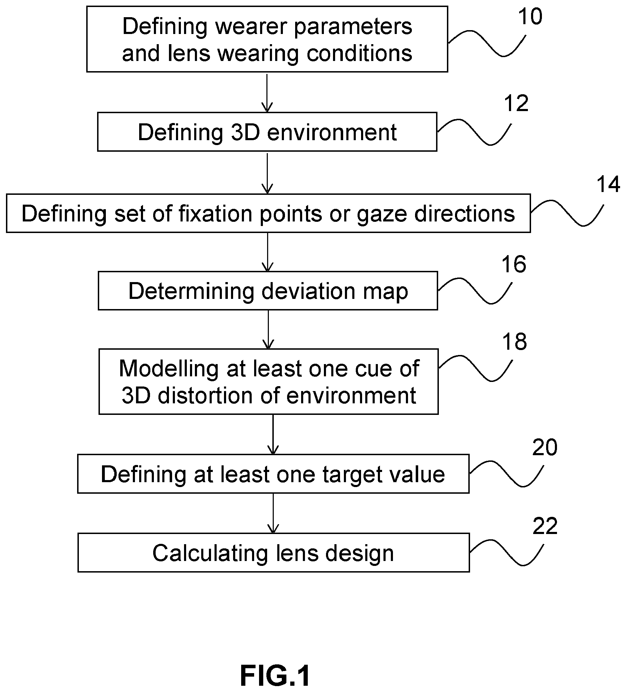

Figure 1 shows steps of a method according to the present disclosure for optimizing at least one ophthalmic lens, i.e. either one lens, or a full visual equipment composed by two lenses, in a particular embodiment.

By way of non-limiting example, the at least one ophthalmic lens may be a progressive lens.

The method comprises a first step 10 of defining wearer parameters and lens wearing conditions.

The wearer parameters comprise at least the wearer's prescription.

The expression "the wearer" means that the person is wearing the at least one ophthalmic lens.

The wearer's prescription may include values of sphere and/or cylinder and/or axis and/or addition. By way of non-limiting example, the prescription may be 0 (0) 0° in far vision and the addition may be +2D.

The lens wearing conditions include relative positions of the wearer's eye and of the at least one ophthalmic lens. They may include parameters such as the pantoscopic angle, the wrap angle, the eye-lens distance or the distance between the eye rotation center and the lens, the pupillary distances, the fitting height.

By way of non-limiting example, standard wearing conditions may comprise a pantoscopic angle of -8°, a wrap angle of 0° and an eye-lens distance of 12 mm and the following additional parameters may be considered: a distance of 11.5 mm between the center of rotation of the eye and the pupil, a distance of 2 mm between the pupil and the cornea, a half pupil distance of 32.5 mm for both eyes, a fitting height of 20 mm and a rectangular frame shape with a lens size (A-size) of 56 mm, a B-size of 32 mm and a distance or bridge of 19 mm between lenses.

The next step 12 consists of defining a tridimensional (3D) environment to be viewed by the wearer's eye through the at least one ophthalmic lens.

By way of non-limiting example, the environment may be defined as two grids of points.

The first grid may be called "wall" and may be a rectangular grid defined by the coordinates (x,y,z) of its four corners A, B, C, D, for instance in mm, in a cartesian referential: A(-1500,0,0), B(1500,0,0), C(1500,4000,0), D(-1500,4000,0). A sampling step of the points along the x, y and z axes may be defined for the first grid, such as 100 mm.

The second grid may be called "floor" and may be a rectangular grid defined by the coordinates (x,y,z) of its four corners A, B, C, D, for instance in mm, in a cartesian referential: A(-1500,0,0), B(1500,0,0), C(1500,0,3000), D(-1500,0,3000). A sampling step of the points along the x, y and z axes may be defined for the second grid, such as 100 mm.

In this virtual object environment, the virtual wearer wearing virtual lenses may be located in such a way that the middle of the center of rotation of both eyes at the point (0,1700,3000) is facing the "wall" with rotations of 0° along the x, y and z axes.

Then, a step 14 consists of defining a set of fixation points or gaze directions. The gaze directions may be the retinal gaze directions. By way of non-limiting example, the virtual wearer may be fixating a virtual fixation point located at (0,1700,0) on the "wall". On the other hand, if a 3D distortion cue requires motion of the wearer or movement of the environment, such motion or movement should be defined at step 14.

Step 10 may be carried out before, during or after steps 12 and 14.

After steps 12 and 14, a step 16 consists of determining a deviation map of the at least one ophthalmic lens, based on the defined wearer parameters and lens wearing conditions, the 3D environment and the set of fixation points or gaze directions.

In case of gaze directions, for each gaze direction with its origin defined at the center of rotation of the eye for central gaze direction or at the center of the pupil of the eye for peripheral gaze direction, the deviation of the ray through each diopter of the lens is calculated. The final deviation is evaluated between the initial gaze direction and the calculated final ray deviated by the lens.

In case of fixation points, for each fixation point the path of ray passing through the center of rotation of the eye for central vision or through the center of the pupil of the eye for peripheral vision, through this fixation point, and deviated by each diopter of the lens is calculated. An optimization algorithm may be required to find the path of this ray. The final deviation is evaluated between the calculated gaze direction from the center of rotation of the eye or the center of the pupil of the eye (depending on the case of a central or peripheral vision) and the calculated ray passing through the fixation point.

In both cases, when the deviation calculation is performed for each gaze direction or each fixation point, it gives the deviation map.

Next, a step 18 consists of modelling at least one cue of 3D distortion of the environment, based on the deviation map, as follows.

For each point of the environment M, we get the perceived view direction through the lenses for each eye, M'_{OD} for the right eye and M'_{OG} for the left eye. These new view directions are interpreted as two 2D images in depth perception calculus (or model) to be converted into 3D images according to different depth cues.

The cue of 3D distortion may be stereopsis, half-square, magnification, motion parallax, vergence, motion disparities, shape from shading, blur or overlapping, which are all well known by the skilled person.

In particular, stereopsis and vergence are based on perceived disparities due to the lens between both eyes.

Half-square is a linear projection cue based on a perspective rule, which could be monocular. It relies on the hypothesis that a square grid, formerly a regular tessellation of a square tile, is not perceived as a square grid due to its local tilt (the tile is not orthogonal to its view angle). Then, the local tilt of the tile can be inferred from the fact that a corner of this tile is not perceived as an isosceles-right triangle, having a right angle and two equal sides. The same inference is made on the tile viewed and distorted through the lens, leading to a "mis-tilted" tile. Then, these mis-tilted tiles are integrated according to two directions, in order to build a 3D distorted surface. Thus over-constrained integration (a vector field of mis-tilts reduced to a depth) leads to a residual error reducing confidence in this cue at the junction of tiles, related to lens astigmatism.

Magnification, also called looming, is based on the apparent size of objects. The higher power of a progressive lens in the near vision zone will relatively increase the size of objects, which makes them appear relatively closer. It may be noted that astigmatism leads to anisotropy in magnification, which could be mathematically considered as a residual error reducing confidence in this cue. It could also be inferred by the visual system as an inconsistent local tilt around an axis orthogonal to the smallest magnification direction. Motion parallax makes it possible to infer 3D of the environment, as stereopsis, and, due to lens distortion, it creates an illusion of movement and deformation of the environment.

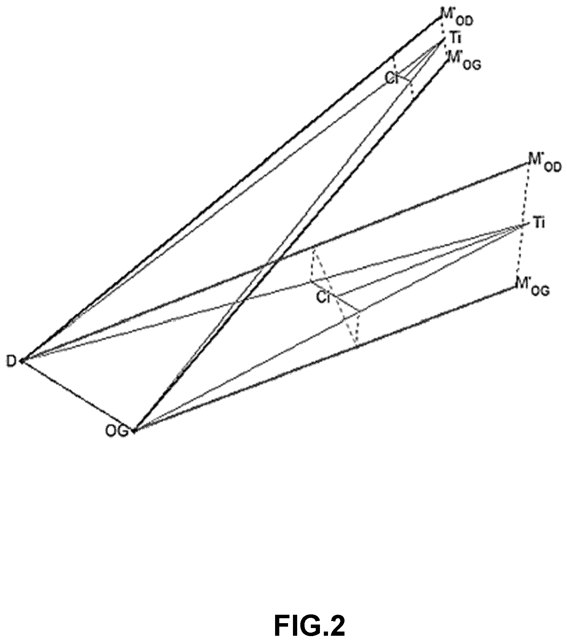

Figure 2 shows the detailed calculation of stereopsis for two different image points, one on top of the graph and the other one in the lower part of the graph.

First, the best intersection Ci of the line from OD (which represents the wearer's right eye) toward M'_{OD} (which represents the image point produced by the right eye through the lens) and from OG (which represents the left eye) toward M'_{OG} (which represents the image point produced by the left eye through the lens) is computed as the middle of the shortest distance. Then, these two lines are projected in the plane defined by this best intersection and the two eyes (OD, OG, Ci) and the second intersection Ti is computed. If the vertical (V) and horizontal (H) disparities are congruent, Ci and Ti are merged. If V and H are not congruent, as shown in Figure 2 in an excessive manner for better legibility, their relative weight may be adjusted. Ci gives an equivalent weight to H and V, whereas Ti solely considers H. The level of mismatch between H and V, i.e. the distance between Ti and Ci, is also a confidence criterion which reflects reliability and which may be taken into account in the local weight of the stereopsis distortion cue, as will be described later in a particular embodiment In case the level of mismatch is high, the weight of the stereopsis distortion cue will be lowered.

Returning to Figure 1, after step 18, a step 20 consists of defining at least one target value related to the at least one cue of 3D distortion. The at least one target value is defined according to at least one predetermined criterion related to 3D distortion.

The at least one target value corresponds to a distortion threshold not to exceed. By way of non-limiting example, a global target value may be defined for 3D distortion criteria for the image points of all the fixation points defined at step 14. As a variant, a different target value may be defined for each image point.

Then, a final step 22 of the method according to the present disclosure consists of calculating a design of the at least one ophthalmic lens that is as close as possible to the at least one target value defined at step 20. The determination of the proximity to the at least one target value may be carried out by using a predetermined evaluation function calculating the difference between evaluated criteria and target values.

This optimization step 22 may consist in selecting an ophthalmic lens among a list of lenses. As a variant, it may consist in starting from an initial ophthalmic lens and modifying it according to one of the embodiments of the method described herein.

Multi-objective optimization may also be implemented to create a set of best-compromise solutions and to select a lens design adapted to the wearer's needs according to one of the embodiments of the method described herein.

In a first particular embodiment, the method according to the present disclosure comprises taking into account at least two cues of 3D distortion of the environment viewed by the wearer through the at least one ophthalmic lens and reducing the inconsistency between at least two of the cues of 3D distortion taken into account. Indeed, inconsistency between different 3D distortion cues, which occurs in particular for progressive lenses, is a source of discomfort for the wearer. Inconsistency means that there are differences between 3D image points obtained from different 3D distortion cues. For instance, the distance between two points may differ depending on the 3D distortion cue. A non-limiting example of that first embodiment is described below.

Step 18 of the first embodiment comprises defining at least two different cues of 3D distortion. By way of non-limiting example, two cues of 3D distortion may be selected to evaluate two distorted images of the object environment viewed by the wearer through the at least one ophthalmic lens: stereopsis and magnification.

Moreover, at step 14 of the first embodiment, the set of fixation points or gaze directions is defined to evaluate the at least two different cues of 3D distortion that have been defined.

The at least one predetermined criterion related to 3D distortion is defined as an inconsistency criterion to evaluate the difference between 3D image points calculated from the at least two different cues of 3D distortion that have been defined. It is to be noted that the inconsistency criterion may be defined for a single cue of 3D distortion.

Step 18 of the first embodiment further comprises evaluating, for the set of fixation points or gaze directions, 3D distortions for each of the defined at least two different cues of 3D distortion. Step 18 of the first embodiment also comprises evaluating, for the set of fixation points or gaze directions, the defined inconsistency criterion corresponding to the evaluated 3D distortions.

For example, the inconsistency criterion between 3D distorted images from stereopsis and magnification is calculated. For each object point of the object environment, if both image points from both considered cues of 3D distortion exist, the distance between these two image points is calculated. The inconsistency criterion is equal to the mean value of calculated distances for all the object points of the object environment.

Besides, 3D distorted images of the object environment viewed through the at least one ophthalmic lens are calculated according to both selected cues of 3D distortion, i.e. stereopsis and magnification in the present example. Thus, for each point of the object environment with (x,y,z) coordinates, a 3D distorted image point according to each distortion is calculated, giving a 3D distorted stereopsis cue point (xs,ys,zs) and a 3D distorted magnification cue point (xm,ym,zm).

Both 3D distorted images for each point of the object environment are calculated for an initial lens product LP1, the design of which is calculated in order to correspond to the wearer parameters and lens wearing conditions of the wearer.

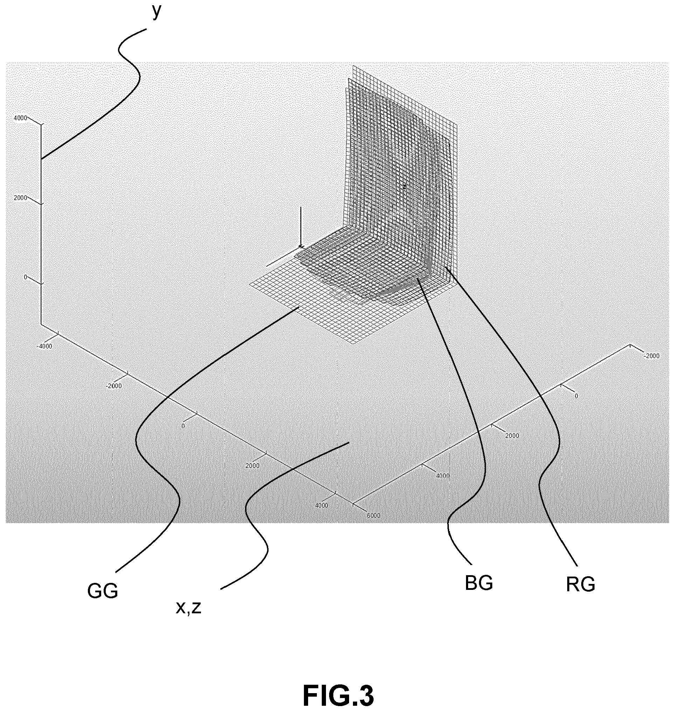

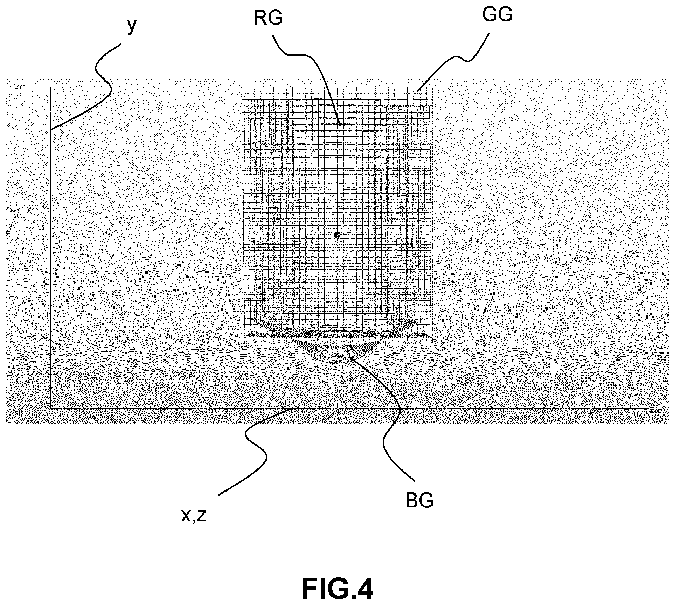

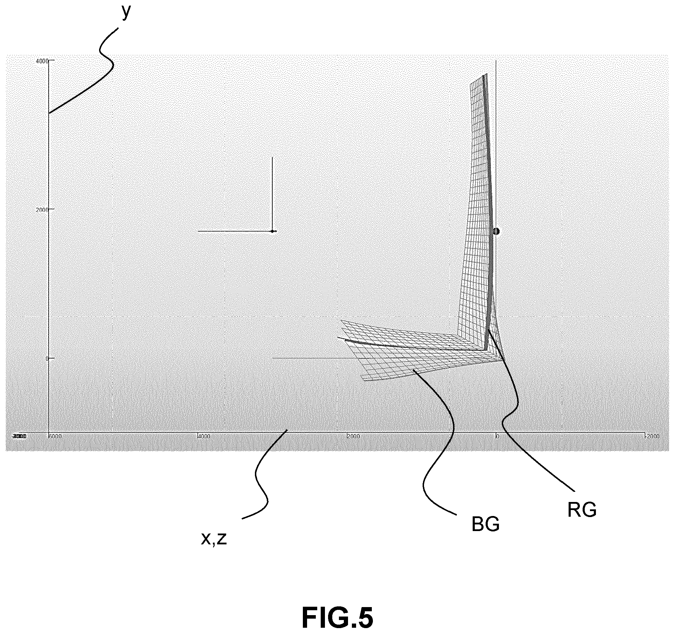

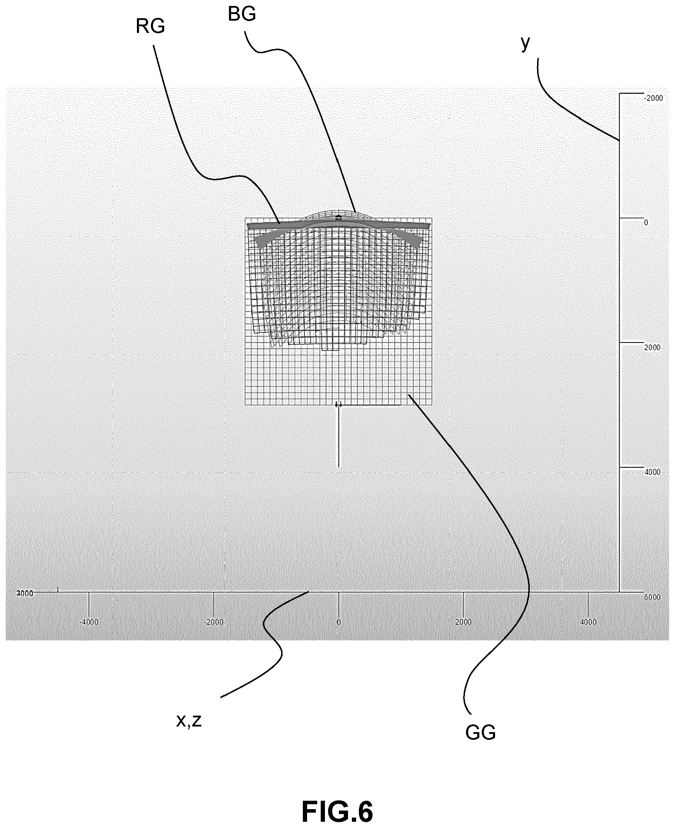

In Figures 3, 4, 5 and 6, the three graduated axes represent the x, y and z axes of the virtual object environment reference frame. The x, z plane corresponds to a horizontal plane at the same level as the floor in the virtual object environment and the y axis corresponds to the vertical of the virtual object environment, perpendicular to the x, z plane.

The three non-graduated axes represent the x, y and z axes of the binocular system reference frame, with an origin located by default at the center of rotation of the cyclopean eye, in the middle of the centers of rotation of both eyes of the virtual wearer. The z axis is aligned with the principal gaze direction of the virtual wearer when looking at a far distance at the same level as his eyes without lenses. The y axis is perpendicular to the z axis and aligned with the vertical axis of the head of the wearer. The x axis is perpendicular to the y, z plane.

The two small spheres near the origin of the binocular system reference frame represent the virtual eyes of the virtual wearer.

The grid GG represents the non-distorted object environment comprising the "wall" and the "floor".

The black sphere located on the "wall" represents the virtual fixation point.

The grid BG represents the distorted grid viewed seen through the lenses according to the stereopsis cue. It comprises a "stereopsis cue distorted wall" and a "stereopsis cue distorted floor".

The grid RG represents the distorted grid seen through the lenses according to the magnification cue. It comprises a "magnification cue distorted wall" and a "magnification cue distorted floor".

Figures 3 to 6 correspond to different points of view of these elements.

From the two 3D distorted images obtained previously and following calculation of inconsistency as described above, the inconsistency criterion is calculated for the lens product LP1. A value of 172 mm, rounded to the nearest mm, is obtained in the present example.

Returning to Figure 1, at step 20 of the first embodiment, the at least one target value is defined for the inconsistency criterion. Either a global target value may be defined for the inconsistency criterion for all the image points associated with the fixations points or gaze directions defined at step 14, or target values may be defined for each point. In addition, weights may be associated with each of these points. Weights may also be associated with environment points, with points on the at least one ophthalmic lens, with gaze directions through the at least one ophthalmic lens or with retinal gaze directions of the eye(s).

The target values may be calculated from another lens or full visual equipment, for example corresponding to the same type as the at least one lens to optimize (single vision lens, progressive lens) with another prescription, or corresponding to another type of lens.

In the present example, a global target value for the inconsistency criterion is set to 0.

Then, three other lens products LP2, LP3 and LP4 are calculated in order to correspond to the wearer parameters and lens wearing conditions. The optical design of each lens product, comprising distribution of power, astigmatism and deviations through lenses as a function of gaze directions, is different from the optical design of lens product LP1, the lens product LP2 having the least different optical design compared to LP1 and the lens product LP4 having the most different one. In case of lens products LP3 and LP4, the geometries of their front surfaces are also different from the ones of lens products LP1 and LP2, LP4 having the most different front surface geometry compared to LP1.

In the same manner as for lens product LP1, the inconsistency criterion is calculated for each other lens product, in order to make it possible to select for the considered wearer the lens product with the lowest level of distortion inconsistency. The results are shown in Table 1 below:

| | Lens products | | | |
|---|---|---|---|---|
| | LP1 | LP2 | LP3 | LP4 |
| Inconsistency criterion (in mm) | 172 | 169 | 147 | 121 |

Therefore, for this wearer, the design of LP4 is selected as the optimized ophthalmic lens design, because it is the product with the lowest inconsistency level among the four lens products.

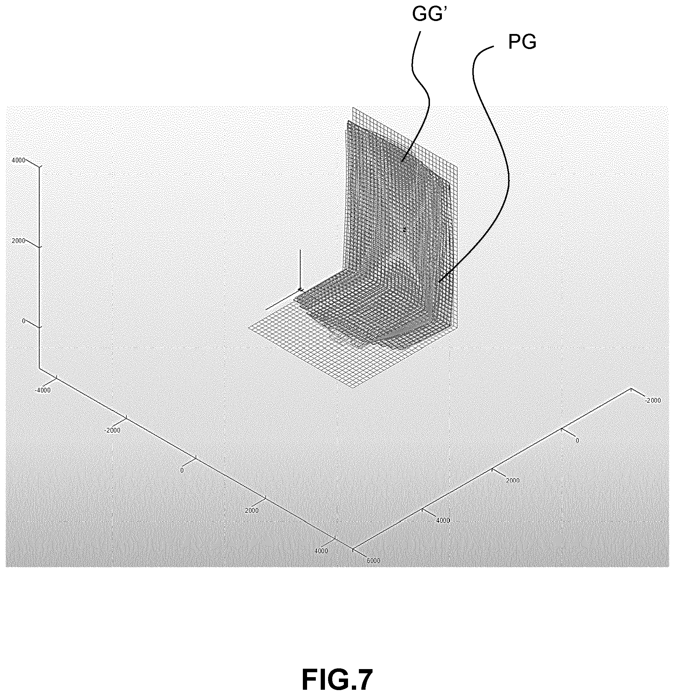

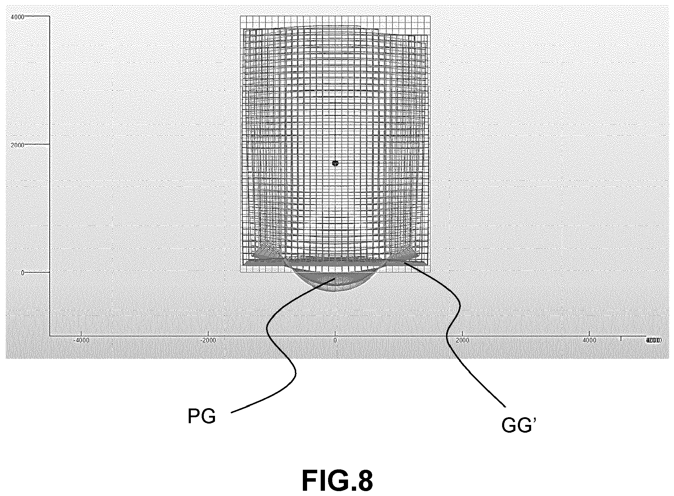

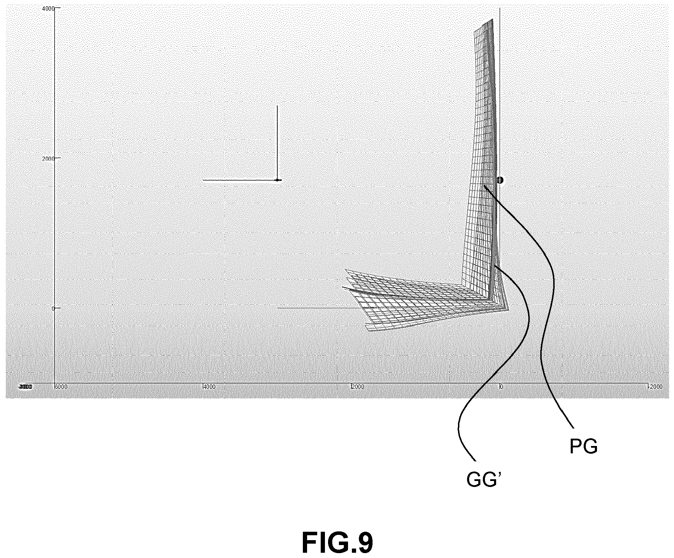

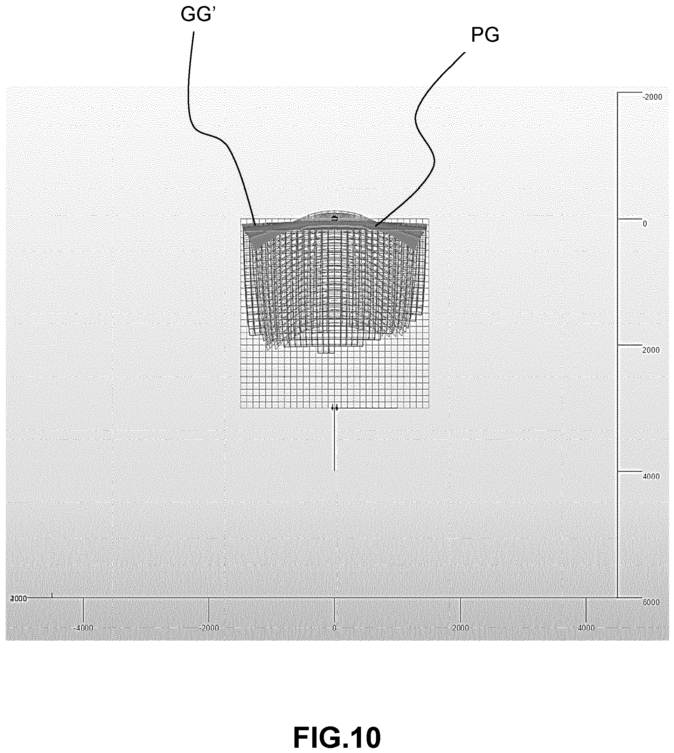

Figures 7 to 10 show the 3D distorted grids calculated for the lens product LP4 and added on the grids of Figures 3 to 6.

In Figures 7 to 10, the grid PG represents the distorted grid seen through lenses for LP4 according to the stereopsis cue. It comprises a "stereopsis cue distorted wall" and a "stereopsis cue distorted floor". The grid GG' represents the distorted grid seen through lenses for LP4 according to the magnification cue. It comprises a "magnification cue distorted wall" and a "magnification cue distorted floor".

In a second particular embodiment, the method according to the present disclosure comprises taking into account at least two cues of 3D distortion of the environment viewed by a wearer through the at least one ophthalmic lens and reducing at least two these cues of 3D distortion respectively related to objects located at different locations (comprising distances and eccentricities) viewed by the wearer. By way of non-limiting example, the stereopsis cue is generally more relevant for a certain volume around a fixation point, or objects close to the wearer, i.e. located at 1 m or less, in a reduced binocular field of view. Thus, an ophthalmic lens may be optimized by reducing 3D distortions linked with the stereopsis cue for the environment of the wearer from 0 to 1 m and reducing 3D distortions linked with the motion parallax cue for the environment of the wearer farther than 1 m in a larger, even monocular part of the field of view. A non-limiting example of that second embodiment is described below.

Step 18 of the second embodiment comprises defining at least two different cues of 3D distortion of the environment.

Moreover, at step 14 of the second embodiment, the set of fixation points or gaze directions is defined to evaluate the at least two different cues of 3D distortion that have been defined. For example, if a 3D distortion cue requires motion of the wearer or movement of the environment, these parameters should be defined.

Furthermore, for each of the at least two different cues of 3D distortion, weights are defined as a function of the location of object points with respect to the wearer, for example as a function of the distance between the object points and the wearer. Weights may be associated with environment points, with points on the at least one ophthalmic lens, with gaze directions through the at least one ophthalmic lens, or with retinal gaze directions of the eye. For instance, weights may reflect the fact that some cues of 3D distortion are more relevant for objects close to the wearer, e.g. located at less than 1 m from the wearer. The weights of the 3D distortion cues may be defined to never have non null values simultaneously for two different 3D distortion cues, but they may also be defined to have overlapping values.

Step 18 of the second embodiment further comprises defining at least one 3D distortion criterion to evaluate either punctually 3D distorted image points corresponding to the set of fixation points, or globally the 3D distorted environment. For example, a 3D distortion criterion may be the distance between 3D distorted image points and corresponding object points. Step 18 of the second embodiment also comprises calculating, for the set of fixation points or gaze directions, 3D distorted image points or the 3D distorted environment for each of the at least two different cues of 3D distortion that have been defined and evaluating, for the set of fixation points or gaze directions, the defined at least one 3D distortion criterion for the calculated 3D distorted image points or the calculated 3D distorted environment.

At step 20 of the second embodiment, the at least one target value is defined for the at least one 3D distortion criterion. Either a global target value may be defined for the at least one 3D distortion criterion for all the image points associated with the fixations points or gaze directions defined at step 14, or target values may be defined for each point. In addition, weights may be associated with each of these points. Weights may also be associated with environment points, with points on the at least one ophthalmic lens, with gaze directions through the at least one ophthalmic lens or with retinal gaze directions of the eye(s).

The target values may be calculated from another lens or full visual equipment, for example corresponding to the same type as the at least one lens to optimize (single vision lens, progressive lens) with another prescription, or corresponding to another type of lens.

Step 22 of the second embodiment consists of calculating the design of the at least one ophthalmic lens that is as close as possible to the at least one target value, taking into account the defined weights.

In a third particular embodiment, the method according to the present disclosure comprises selecting at least one of the cues of 3D distortion that is relevant with respect to the wearer's lifestyle and reducing the selected at least one cue. A non-limiting example of that third embodiment is described below.

The wearer's lifestyle is the set of usual visual tasks involved in the wearer's activities, such as reading, driving, practicing sport, etc.

Step 10 of the third embodiment further comprises defining the wearer's lifestyle, for example via a questionnaire or from connected data.

Step 18 of the third embodiment comprises defining at least one cue of 3D distortion of the environment corresponding to the defined wearer's lifestyle. For example, if the wearer practices a lot of sports, the lens for that wearer may be optimized by reducing 3D distortions linked with the motion parallax cue, because this cue would be the most relevant for this type of activities.

If the wearer practices several activities, or indicates several lifestyles, which are associated with at least two different 3D distortion cues, several 3D distortion cues may be taken into account and activity weights may be associated with these 3D distortion cues, for example depending on the wearer's answers to the questionnaire. Alternatively, only the main activity or lifestyle of the wearer and the associated 3D distortion cue may be selected.

Moreover, at step 14 of the third embodiment, the set of fixation points or gaze directions is defined to evaluate the at least one cue of 3D distortion that has been defined. For example, if a 3D distortion cue requires motion of the wearer or movement of the environment, these parameters should be defined.

Step 18 of the third embodiment further comprises defining at least one 3D distortion criterion to evaluate either punctually 3D distorted image points corresponding to the set of fixation points, or globally the 3D distorted environment. For example, a 3D distortion criterion may be the distance between 3D distorted image points and corresponding object points. Step 18 of the third embodiment also comprises calculating, for the set of fixation points or gaze directions, 3D distorted image points or the 3D distorted environment for each of the at least one cue of 3D distortion that has been defined and evaluating, for the set of fixation points or gaze directions, the defined at least one 3D distortion criterion for the calculated 3D distorted image points or the calculated 3D distorted environment.

At step 20 of the third embodiment, the at least one target value is defined for the at least one 3D distortion criterion. Either a global target value may be defined for the at least one 3D distortion criterion for all the image points associated with the fixations points or gaze directions defined at step 14, or target values may be defined for each point. In addition, weights may be associated with each of these points. Weights may also be associated with environment points, with points on the at least one ophthalmic lens, with gaze directions through the at least one ophthalmic lens or with retinal gaze directions of the eye(s).

The target values may be calculated from another lens or full visual equipment, for example corresponding to the same type as the at least one lens to optimize (single vision lens, progressive lens) with another prescription, or corresponding to another type of lens.

Step 22 of the third embodiment consists of calculating the design of the at least one ophthalmic lens that is as close as possible to the at least one target value, taking into account the defined weights, in particular the activity weights associated with each 3D distortion cue if several 3D distortion cues are considered.

In a fourth particular embodiment, the method according to the present disclosure comprises determining at least one of the cues of 3D distortion to which the wearer is sensitive and reducing that determined at least one cue. Namely, different wearers may be sensitive to different types of distortions, so that it is advantageous to adapt the design of the lens intended for a given wearer by reducing the type of distortion to which that given wearer is most sensitive. A non-limiting example of that fourth embodiment is described below.

The wearer's sensitivity to a 3D distortion cue may be defined according to the wearer's activities. For instance, for dynamic activities involving balance, or for a wearer with an amblyopia, it may be assumed that motion parallax will be a dominant cue and consequently a high weight may be set for that cue. Conversely, for a wearer having a normal stereovision doing some handcrafting, it may be assumed that stereopsis will be a dominant cue and consequently a high weight may be set for that cue.

Another method to determine the relative dominance or absolute sensitivity to specific cues is to measure it directly with the participant during a dedicated test. For instance, a behavior experiment may be carried out, consisting of projecting a virtual slanted ground according to one or several cues and registering the postural reaction of the wearer. If there is only one cue, the absolute postural reaction of the wearer is proportional to the wearer's sensitivity. In case several cues are used, the virtual slanted ground may be oriented according to different tilt directions (front, left, right, etc.). In this case, the tilt direction of the postural reaction will be oriented along the cue to which the wearer is most sensitive.

Step 18 of the fourth embodiment comprises defining at least one cue of 3D distortion to which the wearer is sensitive. It may also comprise determining a level of confidence associated with the defined at least one 3D distortion cue.

The level of confidence may be defined as the inverse of the residual error. It may be any decreasing function. A threshold may possibly be added, below which the level of confidence is considered as null.

The definition of the at least one 3D distortion cue and the determination of the level of confidence may be obtained from the wearer via a questionnaire and/or via a specific experiment and/or from digital measurements collected for instance by a connected frame used by the wearer in real life. For example, if a wearer is more sensitive to the stereopsis cue in a given range than to the motion parallax cue, the lens for that wearer may be optimized by reducing 3D distortions linked to the stereopsis cue.

If the wearer's sensitivities to different 3D distortion cues are non-null, several 3D distortion cues may be taken into account and sensitivity weights may be associated to these 3D distortion cues, for example depending on the answers of the wearer to the questionnaire. Alternatively, only the main sensitivity of the wearer and the associated 3D distortion cue may be selected. The level of confidence associated with the defined at least one 3D distortion cue may also be taken into account to mitigate the sensitivity weights of each 3D distortion cue that is taken into account.

Moreover, at step 14 of the fourth embodiment, the set of fixation points or gaze directions is defined to evaluate the at least one cue of 3D distortion that has been defined. For example, if a 3D distortion cue requires motion of the wearer (this is the case for motion parallax) or movement of the environment, these parameters should be defined. The deviation map of the lens depends on pupil position, which depends on gaze direction.

Step 18 of the fourth embodiment further comprises defining at least one 3D distortion criterion to evaluate either punctually 3D distorted image points corresponding to the set of fixation points, or globally the 3D distorted environment. For example, a 3D distortion criterion may be the distance between 3D distorted image points and corresponding object points. Step 18 of the fourth embodiment also comprises calculating, for the set of fixation points or gaze directions, 3D distorted image points or the 3D distorted environment for the at least one cue of 3D distortion that has been defined and evaluating, for the set of fixation points or gaze directions, the defined at least one 3D distortion criterion for the calculated 3D distorted image points or the calculated 3D distorted environment.

At step 20 of the fourth embodiment, the at least one target value is defined for the at least one 3D distortion criterion. Either a global target value may be defined for the at least one 3D distortion criterion for all the image points associated with the fixations points or gaze directions defined at step 14, or target values may be defined for each point. In addition, weights may be associated with each of these points. Weights may also be associated with environment points, with points on the at least one ophthalmic lens, with gaze directions through the at least one ophthalmic lens or with retinal gaze directions of the eye(s).

The target values may be calculated from another lens or full visual equipment, for example corresponding to the same type as the at least one lens to optimize (single vision lens, progressive lens) with another prescription, or corresponding to another type of lens.

Step 22 of the fourth embodiment consists of calculating the design of the at least one ophthalmic lens that is as close as possible to the at least one target value, taking into account the defined weights, in particular the sensitivity weights and the levels of confidence associated with each 3D distortion cue if several 3D distortion cues are considered.

In a fifth particular embodiment, the method according to the present disclosure combines the first, second, third and fourth embodiments, in order to take into account in the same optimization the wearer's sensitivity to some 3D distortion cues and associated levels of confidence, the wearer's lifestyle and associated activity weights, the proximity of the objects and associated weights depending on object proximity, and the inconsistency between different 3D distortion cues. A non-limiting example of that fifth embodiment is described below.

Step 18 of the fifth embodiment comprises taking into account at least two cues of 3D distortion of the environment viewed by the wearer through the at least one ophthalmic lens.

First weights are assigned to the at least two cues of 3D distortion depending on object proximity, second weights are assigned to the wearer's activities depending on the wearer's lifestyle and third weights are assigned to the at least two cues of 3D distortion depending on the wearer's sensitivity to the at least two cues of 3D distortion.

Moreover, the method according to the fifth embodiment comprises:
reducing the inconsistency between at least two of the cues of 3D distortion as in the first embodiment,
reducing at least two of the cues of 3D distortion weighted with the first weights and respectively related to objects located at different locations with respect to the wearer as in the second embodiment,
selecting at least one of the cues of 3D distortion that is relevant to the wearer's lifestyle comprising the second weights and reducing the at least one selected cue as in the third embodiment and
determining at least one of the cues of 3D distortion to which the wearer is sensitive as in the fourth embodiment and reducing the at least one determined cue weighted with the third weights, taking into account a level of confidence of the at least one determined cue.

In a sixth particular embodiment, the method according to the present disclosure comprises taking into account at least one additional criterion that is not related to distortion. The at least one additional criterion may be related to quality of vision, such as power and astigmatism errors, visual acuity loss, contrast sensitivity or the age of the wearer.

A fourth weight may be assigned to that at least one additional criterion.

Optionally, the calculated acuity and/or depth distortion criteria corresponding to the optimized ophthalmic lens provided by the method according to the present disclosure may be displayed to the user. This is particularly helpful in case a visual equipment is selected among a list, or in case of multi-objective optimization, in order to assist the designer of the visual equipment, or the eye care professional, or the wearer, to choose the final visual equipment.

Although representative methods have been described in detail herein, those skilled in the art will recognize that various substitutions and modifications may be made without departing from the scope of what is described and defined by the appended claims.

## Claims

1. A method for optimizing at least one ophthalmic lens, wherein said method comprises:
defining wearer parameters comprising at least said wearer's prescription and lens wearing conditions including relative positions of a wearer's eye and of said at least one ophthalmic lens;
defining a tridimensional environment to be viewed by said wearer's eye through said at least one ophthalmic lens;
defining a set of fixation points or gaze directions;
determining a deviation map of said at least one ophthalmic lens, based on said defined wearer parameters and lens wearing conditions, said tridimensional environment and said set of fixation points or gaze directions;
modelling at least one cue of tridimensional distortion of said environment, based on said deviation map;
defining at least one target value related to said at least one cue of tridimensional distortion according to at least one predetermined criterion related to tridimensional distortion;
calculating a design of said at least one ophthalmic lens that is as close as possible to said at least one target value.

2. A method according to claim 1, wherein it comprises taking into account at least two cues of tridimensional distortion of an environment viewed by a wearer through said at least one ophthalmic lens and reducing the inconsistency between at least two of said cues of tridimensional distortion.

3. A method according to claim 2, wherein it comprises:
defining at least two different cues of tridimensional distortion;
defining said set of fixation points or gaze directions to evaluate said defined at least two different cues of tridimensional distortion;
defining an inconsistency criterion to evaluate a difference between tridimensional image points calculated from said at least two different cues of tridimensional distortion;
evaluating, for said set of fixation points or gaze directions, tridimensional distortions for each of said defined at least two different cues of tridimensional distortion;
evaluating, for said set of fixation points or gaze directions, said defined inconsistency criterion corresponding to said evaluated tridimensional distortions;
defining said at least one target value for said inconsistency criterion.

4. A method according to claim 1, wherein it comprises taking into account at least two cues of tridimensional distortion of an environment viewed by a wearer through said at least one ophthalmic lens and reducing at least two of said cues of tridimensional distortion respectively related to objects located at different locations viewed by said wearer.

5. A method according to claim 4, wherein it comprises:
defining at least two different cues of tridimensional distortion of the environment;
defining said set of fixation points or gaze directions to evaluate said defined at least two different cues of tridimensional distortion;
defining, for each of said at least two different cues of tridimensional distortion, weights as a function of the location of object points with respect to said wearer;
defining at least one tridimensional distortion criterion to evaluate either punctually tridimensional distorted image points corresponding to said set of fixation points, or globally the tridimensional distorted environment;
calculating, for said set of fixation points or gaze directions, tridimensional distorted image points or the tridimensional distorted environment for each of said defined at least two different cues of tridimensional distortion;
evaluating, for said set of fixation points or gaze directions, said defined at least one tridimensional distortion criterion for said calculated tridimensional distorted image points or said calculated tridimensional distorted environment;
defining said at least one target value for said at least one tridimensional distortion criterion;
calculating said design of said at least one ophthalmic lens that is as close as possible to said at least one target value, taking into account said defined weights.

6. A method according to claim 1, wherein it comprises selecting at least one of said cues of tridimensional distortion that is relevant with respect to the wearer's lifestyle and reducing said selected at least one cue.

7. A method according to claim 6, wherein it comprises:
defining said wearer's lifestyle;
defining at least one cue of tridimensional distortion corresponding to said defined wearer's lifestyle;
defining said set of fixation points or gaze directions to evaluate said defined at least one cue of tridimensional distortion;
defining at least one tridimensional distortion criterion to evaluate either punctually tridimensional distorted image points corresponding to said set of fixation points, or globally the tridimensional distorted environment;
calculating, for said set of fixation points or gaze directions, tridimensional distorted image points or the tridimensional distorted environment for said defined at least one cue of tridimensional distortion;
evaluating, for said set of fixation points or gaze directions, said defined at least one tridimensional distortion criterion for said calculated tridimensional distorted image points or said calculated tridimensional distorted environment;
defining said at least one target value for said at least one tridimensional distortion criterion.

8. A method according to claim 1, wherein it comprises determining at least one of said cues of tridimensional distortion to which said wearer is sensitive and reducing said determined at least one cue.

9. A method according to claim 8, wherein it comprises:
defining at least one cue of tridimensional distortion to which said wearer is sensitive;
defining said set of fixation points or gaze directions to evaluate said defined at least one cue of tridimensional distortion;
defining at least one tridimensional distortion criterion to evaluate either punctually tridimensional distorted image points corresponding to said set of fixation points, or globally the tridimensional distorted environment;
calculating, for said set of fixation points or gaze directions, tridimensional distorted image points or the tridimensional distorted environment for said defined at least one cue of tridimensional distortion;
evaluating, for said set of fixation points or gaze directions, said defined at least one tridimensional distortion criterion for said calculated tridimensional distorted image points or said calculated tridimensional distorted environment;
defining said at least one target value for said at least one tridimensional distortion criterion.

10. A method according to claim 1, wherein it comprises:
taking into account at least two cues of tridimensional distortion of an environment viewed by a wearer through said at least one ophthalmic lens;
assigning first weights to said at least two cues of tridimensional distortion depending on object proximity;
assigning second weights to wearer's activities depending on said wearer's lifestyle;
assigning third weights to said at least two cues of tridimensional distortion depending on the wearer's sensitivity to said at least two cues of tridimensional distortion;
reducing the inconsistency between at least two of said cues of tridimensional distortion;
reducing at least two of said cues of tridimensional distortion weighted with said first weights and respectively related to objects located at different locations with respect to said wearer;
selecting at least one of said cues of tridimensional distortion that is relevant with respect to the wearer's lifestyle comprising said second weights and reducing said at least one selected cue;
determining at least one of said cues of tridimensional distortion to which said wearer is sensitive and reducing said at least one determined cue weighted with said third weights, taking into account a level of confidence of said at least one determined cue.

11. A method according to any of the preceding claims, wherein it further comprises taking into account at least one additional criterion related to quality of vision.

12. A method according to claim 11, wherein it further comprises assigning a fourth weight to said at least one additional criterion.

13. A method according to claim 11 or 12, wherein said additional criterion is taken in a group comprising power and astigmatism error, acuity loss, contrast sensitivity and the wearer's age.

14. A method according to any of the preceding claims, wherein said at least one cue of tridimensional distortion is taken in a group comprising stereopsis, half-square, magnification, motion parallax, vergence, motion disparities, shape from shading, blur and overlapping.

15. A method according to any of the preceding claims, wherein said at least one ophthalmic lens is a progressive lens.
